# EUROPEAN PATENT SPECIFICATION

(11) **EP 0 823 363 B1**
(45) Date of publication and mention of the grant of the patent: **09.04.2003**
(21) Application number: 97305957.9
(22) Date of filing: 05.08.1997
(51) Int. Cl.: B62D 23/00, B62D 29/00, B62D 21/11

(54) **Body structure for a motor vehicle**
Karosserie-Tragstruktur für ein Fahrzeug
Structure d'une carrosserie d'un véhicule à moteur

(30) Priority: 05.08.1996 JP 22306696
(43) Date of publication of application: 11.02.1998
(73) Proprietor: HONDA GIKEN KOGYO KABUSHIKI KAISHA, Minato-ku Tokyo (JP)
(72) Inventor: Iwatsuki, Syuichiro, 1-4 Chuo 1-chome, Wako-shi, Saitama-ken (JP); Sasaki, Sakae, 1-4 Chuo 1-chome, Wako-shi, Saitama-ken (JP)
(74) Representative: Leale, Robin George

(56) References cited:
- EP-A- 0 547 346
- DE-A- 4 125 832
- FR-A- 2 718 408

## Description

The present invention relates to a vehicle body structure of the space frame type, and in particular to a vehicle body structure including a rear pillar which is curved so as to avoid interference with a rear wheel.

Elongate hollow members formed by extruding aluminum or other lightweight metals into a prescribed cross sectional shape have lately attracted attention as automotive frame members, because they can be freely formed with a desired cross section and can also be of different thicknesses in different directions, so that a desired mechanical strength can be imparted to each individual part of the vehicle body in a highly efficient manner.

In a so-called space frame formed by welding metallic tubes or other shaped members, the rear pillar is sometimes curved in such a manner that an intermediate part of it bulges laterally outwards to maximize the opening of the tail gate, and a lower end of the pillar is curved inwardly to avoid interference with a rear wheel.

When a rear pillar of such a shape is subjected to a bending load or a twisting load, relatively large stress tends to develop in the parts having a relatively large amount of curvature, but not in parts having a smaller amount of curvature. In particular, mechanical stress tends to concentrate in the upper part of the aforementioned inward curve formed in the pillar for accommodating the rear wheel. Consequently, in order to optimize the overall rigidity of the frame, it has been necessary to weld reinforcing members to the parts where the stress tends to concentrate, or to increase the wall thickness of such parts. However, such measures inevitably led to an increase in weight, thus compromising the intended advantage of the space frame in allowing weight to be reduced.

It is known from DE-4 125 832A to provide a vehicle body structure including a rear pillar extending between a roof member and a floor member, said rear pillar comprising an extruded member having a lower part which is inwardly curved to avoid interference with a rear wheel (precharacterising part of claim 1).

It is known from EP-A-0 547 346 to provide an extruded member as part of a vehicle body structure, and a spring strut receiving device comprising a spring strut mounting part and a bracket part carrying the spring strut mounting part, the bracket part being secured to the extruded member and extending therealong.

A motor vehicle body framework is disclosed in FR-A-2 718 408.

According to the present invention there is provided a vehicle body structure characterised in that said rear pillar has a substantially uniform cross section and in that said vehicle body structure comprises a mounting base for a rear suspension component, said mounting base comprising a rear suspension component mounting part and a bracket part carrying said component mounting part, wherein said bracket part is secured to said inwardly curved part of said rear pillar where it has its largest amount of curvature, said bracket part extending along said rear pillar and being securely attached thereto.

As previously mentioned, mechanical stress tends to concentrate in the said inwardly curved part, particularly when the rear pillar is subjected to a bending load or a twisting load. However the bracket part of the said mounting base effectively reinforces the rear pillar against such stress concentration. Because the bracket part serves the dual purpose of providing such reinforcement and supporting a rear suspension component, such as a spring or a damper, the rear part of the vehicle body is effectively reinforced without increasing its weight.

The curvature of the inwardly curved part of the pillar tends to be particularly significant when the opening area of a rear opening of the vehicle body is maximized. Such rear opening may be for a normal rear window, a tail gate, or a hatch-back rear window.

Preferably the rear pillar is made of extruded aluminum or aluminum alloy, and the said bracket part is then welded to the pillar. Such an extruded member may have any desired cross section so that a desired rigidity and strength against a bending load in any direction can be achieved using a minimum amount of material. Further, the cross section of the extruded member may be designed such that its rigidity and strength against a twisting load may be optimized. Typically the rear pillar is made of extruded aluminum or an aluminum alloy, but the present invention is equally applicable to frame members made of other materials such as plastics and other lightweight metals or alloys which may be formed with a substantially uniform cross section. Also, the principles of the present invention are applicable not only to rear pillars but also to other frame members.

An embodiment of the invention will now be described by way of example and with reference to the accompanying drawings, in which:-
Figure 1 is a partly broken-away perspective view showing a vehicle body frame to which the present invention is applied; and

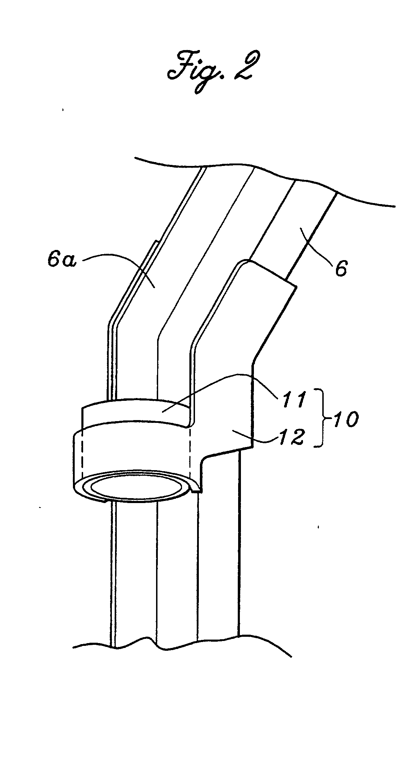

Figure 2 is an enlarged front view of a relevant part of a right-hand rear pillar as seen from the front.

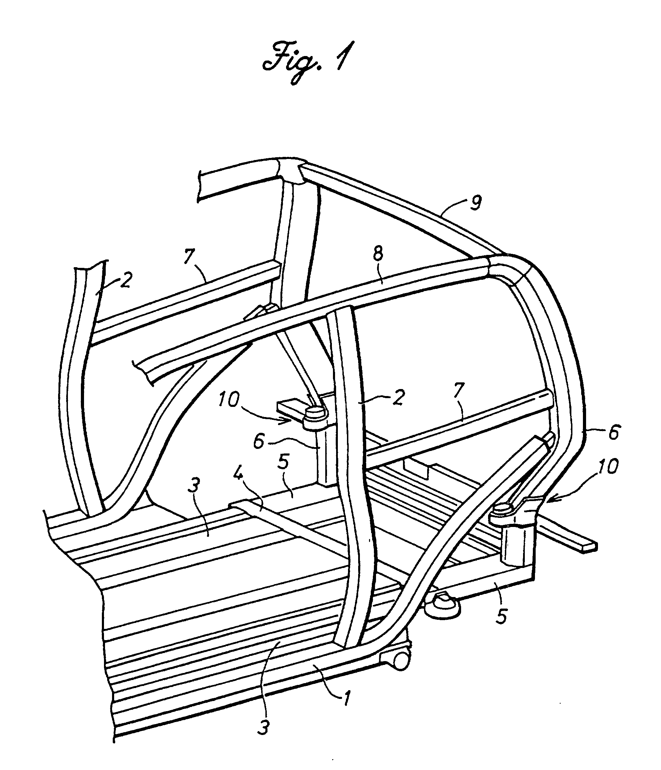

Figure 1 shows part of a vehicle body frame constructed according to the present invention. This vehicle body frame consists of a space frame structure formed by combining and welding elongate members having a uniform cross section which are made from lightweight metallic material such as aluminum or an aluminum alloy by extrusion so as to have a cross sectional shape suitable for each particular application. The cross sectional shape may be freely selected depending on the need of each particular application, and may be hollow or of other suitable shapes.

A lower end of each of a pair of centre pillars 2 is welded to an upper surface of a side sill 1 which extends in the fore-and-aft direction. The inner side of each of the side sills 1 is welded to a front floor member 3 which is also made by combining extruded lightweight metallic material, and the rear end of the front floor member 3 is welded to rear floor side members 5 via a cross member 4. The rear floor side members and the cross member 4 are all made of similar extruded members in this embodiment. The rear ends of the rear floor side members are welded to the lower ends of a pair of rear pillars 6. Vertically intermediate parts of each of the centre pillars 2 and the corresponding rear pillar 6 are joined together by a side beam 7 extending in the fore-and-aft direction. Each of the rear pillars 6 has a middle part which curves laterally outward so as to maximize the opening area of the tail gate. The upper end of each of the rear pillars 6 is welded to the rear end of a roof side member 8, and the right and left rear pillars 6 are joined together by a roof cross member 9 which extends laterally across the vehicle body. The most outwardly bulging part of each of the rear pillars 6 is welded to the rear end of the side sill 1 which is curved obliquely upward so as to avoid interference with the rear wheel. A part of each of the rear pillars 6 extending from a middle part thereof to a lower end thereof is curved laterally inwards so as also to avoid interference with the rear wheel.

When a rear pillar of such a shape is subjected to a bending load or a twisting load, relatively large stress tends to develop in the parts having a relatively large amount of curvature, but not in parts having a small amount of curvature. Therefore a rear damper base 10 is welded to a part 6a of the rear pillar 6 having the largest amount of curvature, where it is curved laterally inward to avoid interference with the rear wheel, so as to reinforce this part. Typically, the rear pillar 6 has its largest curvature at the upper end of the bulge for accommodating the rear wheel.

The rear damper base 10 is formed by stamp forming a metallic plate member made of the same material as the frame structure members, and comprises a cup-shaped damper mounting part 11 and a bracket part 12 for securing this mounting part to the rear pillar 6. These two parts 11 and 12 are formed into a sub-assembly by being welded together in advance. By welding this rear damper base 10 to the part 6a of the rear pillar 6 having the largest amount of curvature, or to an adjoining part thereof, it is possible to reinforce the part where the stress tends to concentrate without requiring any other reinforcing member.

Thus the damper base is mounted to a part of the rear pillar where stress tends to concentrate, so that the damper base effectively reinforces the rear pillar, and can increase both its bending rigidity and its twisting rigidity as well as its mechanical strength. In particular, because the damper base thus serves also as a reinforcing member, the number of parts can be reduced, and any increase in weight and manufacturing cost can be minimized.

It will thus be seen that the present invention, at least in its preferred forms, provides an improved space frame type vehicle body structure which can be made highly rigid without increasing its weight; and furthermore provides such a body structure including a rear pillar which may be highly curved while maintaining a sufficient rigidity, without using any additional reinforcement; and furthermore provides such a body structure which can maximize the opening area at a rear part thereof without compromising mechanical strength.

## Claims

1. A vehicle body structure including a rear pillar (6) extending between a roof member (8) and a floor member (5), said rear pillar comprising an extruded member having a lower part which is inwardly curved to avoid interference with a rear wheel, **characterised in that** said rear pillar has a substantially uniform cross section and **in that** said vehicle body structure comprises a mounting base (10) for a rear suspension component, said mounting base comprising a rear suspension component mounting part (11) and a bracket part (12) carrying said component mounting part, wherein said bracket part (12) is secured to said inwardly curved part of said rear pillar (6) where it has its largest amount of curvature (6a), said bracket part extending along said rear pillar and being securely attached thereto.

2. A vehicle body structure according to claim 1, wherein said rear pillar (6) further includes an outwardly curved part extending upwardly from said inwardly curved part and defining a rear opening of said vehicle body.

3. A vehicle body structure according to claim 1 or 2, wherein said rear pillar (6) is made of extruded aluminum or aluminum alloy, and said bracket part (12) is welded to said rear pillar.

4. A vehicle body structure according to claim 1, 2 or 3, wherein said rear suspension component is a damper.

5. A vehicle body structure according to any preceding claim, wherein said rear pillar (6) extends between a roof side member (8) and a floor side member (5).

## Patentansprüche

1. Fahrzeugkarosseriestruktur mit einer Hecksäule (6), die zwischen einem Dachelement (8) und einem Bodenelement (5) verläuft, wobei die Hecksäule ein extrudiertes Element mit einem unteren Teil umfasst, der nach innen gekrümmt ist, um eine Störung mit einem Hinterrad zu vermeiden, **dadurch gekennzeichnet, dass** die Hecksäule einen im Wesentlichen gleichförmigen Querschnitt aufweist und dadurch, dass die Fahrzeugkarosseriestruktur eine Montagebasis (10) für eine hintere Aufhängungskomponente umfasst, wobei die Montagebasis ein Montageteil (11) für die hintere Aufhängungskomponente und ein Halterungsteil (12) umfasst, das das Komponenten-Montageteil trägt, wobei das Halterungsteil (12) an dem nach innen gekrümmten Teil der Hecksäule (6) dort befestigt ist, wo er seinen stärksten Krümmungsgrad (6a) aufweist, wobei das Halterungsteil entlang der Hecksäule verläuft und an derselben fest angebracht ist.

2. Fahrzeugkarosseriestruktur nach Anspruch 1, wobei die Hecksäule (6) ferner einen nach außen gekrümmten Teil umfasst, der von dem nach innen gekrümmten Teil nach oben verläuft und eine Hecköffnung der Fahrzeugkarosserie definiert.

3. Fahrzeugkarosseriestruktur nach Anspruch 1 oder 2, wobei die Hecksäule (6) aus extrudiertem Aluminium oder extrudierter Aluminiumlegierung hergestellt ist und das Halterungsteil (12) an die Säule geschweißt ist.

4. Fahrzeugkarosseriestruktur nach Anspruch1, 2, oder 3,wobei die hintere Aufhängungskomponente ein Dämpfer ist.

5. Fahrzeugkarosseriestruktur nach einem der vorangehenden Ansprüche, wobei die Hecksäule (6) zwischen einem seitlichen Bodenelement (8) und einem seitlichen Dachelement (5) verläuft.

## Revendications

1. Structure de caisse de véhicule comprenant un montant arrière (6) s'étendant entre un élément de toit (8) et un élément de plancher (5), ledit montant arrière comprenant un élément extrudé ayant une partie inférieure qui est incurvée vers l'intérieur pour éviter d'interférer avec une roue arrière, **caractérisée en ce que** ledit montant amère présente une section transversale sensiblement uniforme et **en ce que** ladite structure de caisse de véhicule comprend une base de montage (10) pour un composant de suspension arrière, ladite base de montage comprenant une partie de montage de composant de suspension arrière (11) et une partie de support (12) portant ladite partie de montage de composant, dans laquelle ladite partie de support (12) est fixée à ladite partie incurvée vers l'intérieur dudit montant arrière (6) où il présente son degré de courbure (6a) le plus important, ladite partie de soutien s'étendant le long dudit montant arrière et étant fixée fermement à celui-ci.

2. Structure de caisse de véhicule selon la revendication 1, dans laquelle ledit montant arrière (6) comprend en outre une partie incurvée vers l'extérieur s'étendant vers le haut depuis ladite partie incurvée vers l'intérieur et définissant une ouverture arrière de ladite caisse de véhicule.

3. Structure de caisse de véhicule selon la revendication 1 ou la revendication 2, dans laquelle ledit montant arrière (6) est constitué d'aluminium ou d'alliage d'aluminium extrudé, et dans laquelle ladite partie de caisse (12) est soudée audit montant arrière.

4. Structure de caisse de véhicule selon la revendication 1, 2 ou 3, dans laquelle ledit composant de suspension arrière est un amortisseur.

5. Structure de caisse de véhicule selon l'une quelconque des revendications précédentes, dans laquelle ledit montant arrière (6) s'étend entre un élément latéral de toit (8) et un élément latéral de plancher (5).
